# EUROPEAN PATENT SPECIFICATION

(11) **EP 4 314 614 B1**
(45) Date of publication and mention of the grant of the patent: **06.05.2026**
(21) Application number: 22717905.8
(22) Date of filing: 25.03.2022
(51) Int. Cl.: F16L 9/18, F16L 39/00

(54) **LIQUID RECOVERY AND SAFETY SYSTEM FOR A PRESSURISED LIQUID SUPPLY LINE**
FLÜSSIGKEITSRÜCKGEWINNUNGS- UND SICHERHEITSSYSTEM FÜR EINE UNTER DRUCK STEHENDE FLÜSSIGKEITSVERSORGUNGSLEITUNG
SYSTÈME DE RÉCUPÉRATION DE LIQUIDE ET DE SÛRETÉ POUR CANALISATION D'ALIMENTATION EN LIQUIDE SOUS PRESSION

(30) Priority: 26.03.2021 IT 202100007544
(43) Date of publication of application: 07.02.2024
(73) Proprietor: Carbo S.r.l., 12058 Santo Stefano Belbo (CN) (IT)
(72) Inventor: BONA, Pietro, 12058 Santo Stefano Belbo (CN) (IT)
(74) Representative: Studio Torta S.p.A.
(86) International application number: PCT/IB2022/052759
(87) International publication number: WO 2022/201118

(56) References cited:
- DE-A1- 3 142 702
- DE-U1- 202009 006 902
- US-B2- 10 473 252

## Description

### Cross-Reference to Related Applications

This patent application claims priority of Italian Patent Application No. 102021000007544 filed on March 26, 2021.

### Technical Field

The present invention relates to a liquid recovery and safety system for a pressurised liquid supply line, in particular for a line installed at industrial plants, swimming pools, hotels or other facilities, in order to recover any liquid leaked out of the line in the event of failure or wear thus to ensure the safety of the operators and of the surrounding environment.

### State of the Art

As is known, in general, pressurised liquid supply lines comprise a pipe which is connected in fluid-tight manner, at its opposite ends, to a delivery fitting of a pump, and to an injection fitting for conveying the liquid to a distributor or to a further pipe.

The liquid supplied by the line can also be represented by chemical substances recognized as hazardous to humans and/or to the surrounding environment. For this reason, the need is felt to place such lines in safety conditions, i.e. to prevent any liquid leaked out of the line due to wear or failures from generating damage in the surrounding environment or to operators and/or from generating slip hazards for such operators.

In the known solutions, sometimes, a protective sheath is provided which covers the pipe in a fixed and permanent manner.

Although such protective sheath is effective as shield for any liquid that seeps when breakages or cracks occur in an intermediate segment of the pipe, the same protective sheath does not prove to be as effective in the hypothesis in which the leakage of liquid takes place in proximity to the delivery and/or injection fittings. In fact, generally, such fittings cannot be validly covered by the protective sheath, in order to leave space and freedom for the operators to carry out inspection and/or maintenance operations.

Furthermore, the known solutions generally fail to recover any liquid seeped from the pipe.

DE3142702A1, US10473252B2 and DE202009006902U1 relate to solutions with a protective sheath which is provided with a side hole and is fixed in a stable and irreversible manner to the pipe. For example, in DE3142702A1 the sheath is fixed by means of two fittings welded to the pipe. This type of coupling does not allow moving and repositioning the sheath, nor inspecting the pipe, nor possibly reusing the components.

### Technical Problem

In light of the foregoing, the need is particularly felt to provide a system that is able to ensure the safety of the operators and of the surrounding environment, to recover any liquid seeped from the pipe, and in any case to give the possibility to carry out inspection and maintenance operations. Furthermore, the need is felt to increase the protection of the pipe, averting the occurrence of premature wear phenomena, with the consequent formation of breakages or cracks.

Therefore, aim of the present invention is to provide a liquid recovery and safety system for a pressurised liquid supply line which meets the above requirements, preferably with a high level of effectiveness and/or with a limited number of components which, moreover, could be normally reused, without having to be replaced, after the inspection/maintenance operations.

### Subject of the Invention

According to the invention, a liquid recovery and safety system and a corresponding pressurised liquid supply line are provided, as defined in the appended claims.

### Brief Description of the Drawings

The features and the advantages of the present invention will be apparent with greater evidence from the detailed description of exemplifying embodiments, with reference to the accompanying drawings, wherein:
- Fig. 1A is a schematic and perspective view of a first embodiment of the liquid recovery and safety system for a pressurised liquid supply line, according to the present invention;
- Fig. 1B is a lateral view of the supply line of Fig. 1A, with some parts shown in cross section;
- Figs. 1C and 1D are similar to Figs. 1A and 1B, respectively, with two components which are shown in a different position to enable, for example, inspection and/or maintenance operations;
- Figs. 2A-2D are similar to Figs. 1A-1D, respectively, and show a second embodiment according to the present invention;
- Figs. 3A-3D are similar to Figs. 1A-1D and show a variation of the first embodiment;
- Figs. 4A-4D are similar to Figs. 2A-2D and show the variation of Figs. 3A-3D applied to the second embodiment;
- Figs. 5A and 5B show, in sectional view and on an enlarged scale, a fixing device forming part of the system of the present invention, the fixing device being arranged in a blocking position and in a release position, respectively;
- Figs. 6A and 6B are similar to Figs. 5A and 5B and show an alternative solution of the fixing device; and
- Figs. 7A-7C show different alternatives for the mounting configuration for a component of the system according to the present invention.

### Description of the Exemplifying Embodiments of the Invention

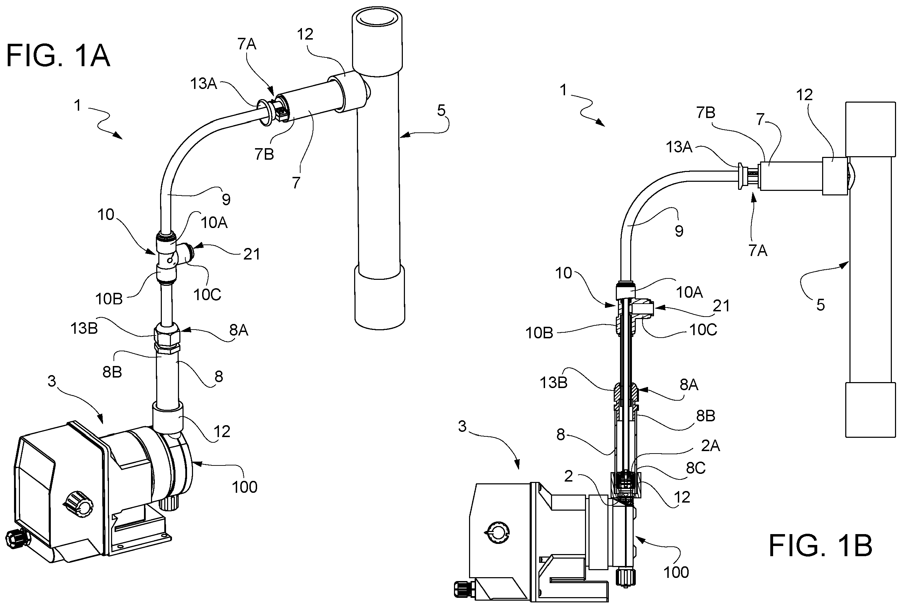

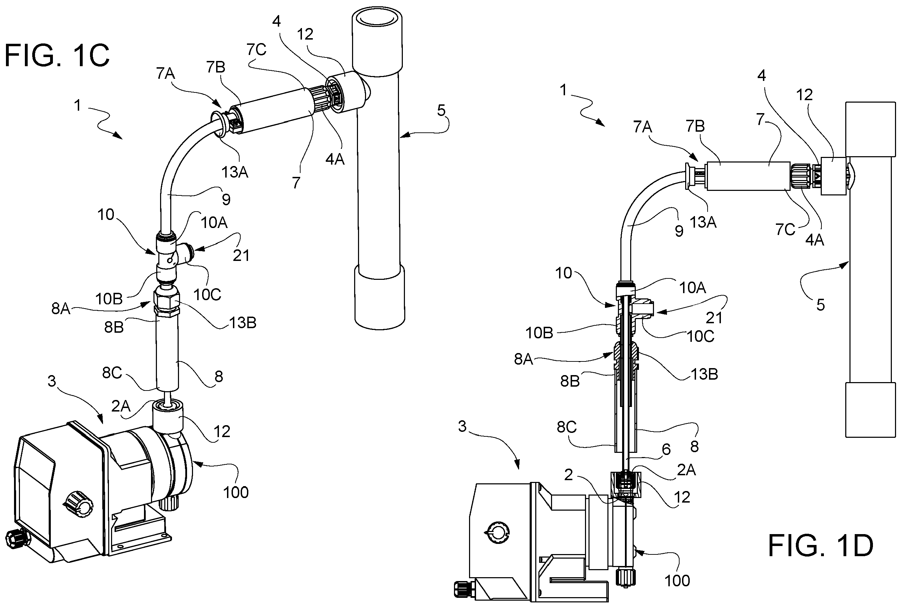

With reference to Figures 1A-1D, in a first embodiment, reference numeral 1 indicates a liquid recovery and safety system for a pressurised liquid supply line which is represented, as a whole, by reference numeral 100.

With reference to Figure 1D, the line 100 comprises a delivery fitting 2. In some solutions, the fitting 2 can integrate, therein, a delivery valve, of a known type and not illustrated in detail.

The line 100 further comprises a pipe 6 having an end segment which is coupled in fluid-tight manner to the fitting 2 by means of a hydraulic sealing device 2A, also of a known type and not described in detail.

The fitting 2 forms part of a delivery device 3, defined for example by a pump. More generally, the device 3 is configured to channel a pressurised liquid in the pipe 6 through the fitting 2 thereof.

Likewise, the line 100 comprises an injection fitting 4, inside which an injection valve can be integrated in a known manner and not illustrated, and the pipe 6 is connected in fluid-tight manner to the fitting 4 by means of a hydraulic sealing device 4A, of a known type and not described in detail. The fitting 4 forms part of a distribution device 5, defined for example by a distributor, or by a dispenser, or by a simple hydraulic pipe, for conveying the pressurised liquid received through the pipe 6.

According to an aspect of the present invention, the system 1 comprises two sleeves 7, 8 arranged around respective segments of the pipe 6, coaxially to the latter, in proximity to the fittings 2 and 4, respectively.

For each sleeve 7, 8, the system 1 comprises a respective fixing device 7A and 8A, which is manoeuvrable manually and/or with the aid of suitable equipment, for example a wrench, for releasably fixing the sleeve 7, 8 with respect to the pipe 6, in any desired position along the pipe 6. In particular, the fixing device 7A, 8A is carried by a first end 7B, 8B of the respective sleeve 7, 8.

When the fixing device 7A, 8A is released, the respective sleeve 7, 8 can be axially moved along the pipe 6 from and towards an operating position (shown schematically in Figures 1A and 1B), in which the sleeve 7, 8 covers a respective end segment of the pipe 6. For example, in this operating position, the sleeve 7, 8 has a second end 7C, 8C which is axially opposite to the respective first end 7B, 8B and, in the specific illustrated example, can cover the corresponding sealing device 2A, 4A.

As mentioned above, the sleeve 7, 8 can be moved away, i.e. axially retracted, with respect to the operating position of Figures 1A and 1B, for example for carrying out inspection and/or any maintenance operations on the corresponding sealing device 2A, 4A, and/or on the corresponding end segment of the pipe 6, and/or on the corresponding fitting 2, 4.

As mentioned above, each sleeve 7, 8 is releasably fixed. The term "releasably" means that the fixing device 7A, 8A can be loosened to allow the corresponding sleeve 7, 8 to slide axially with respect to the pipe 6, and then it can be tightened again to block the sleeve 7, 8 in a new position, or in the same previous position, without plastic deformations and/or breakages in the fixing device 7A, 8A which could compromise the repetition of these loosening and tightening operations.

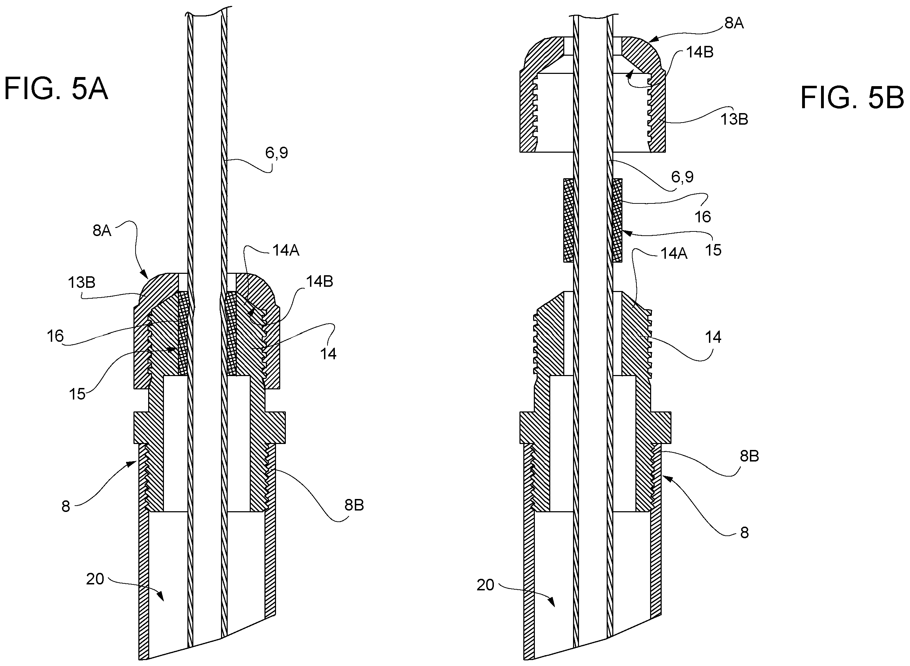

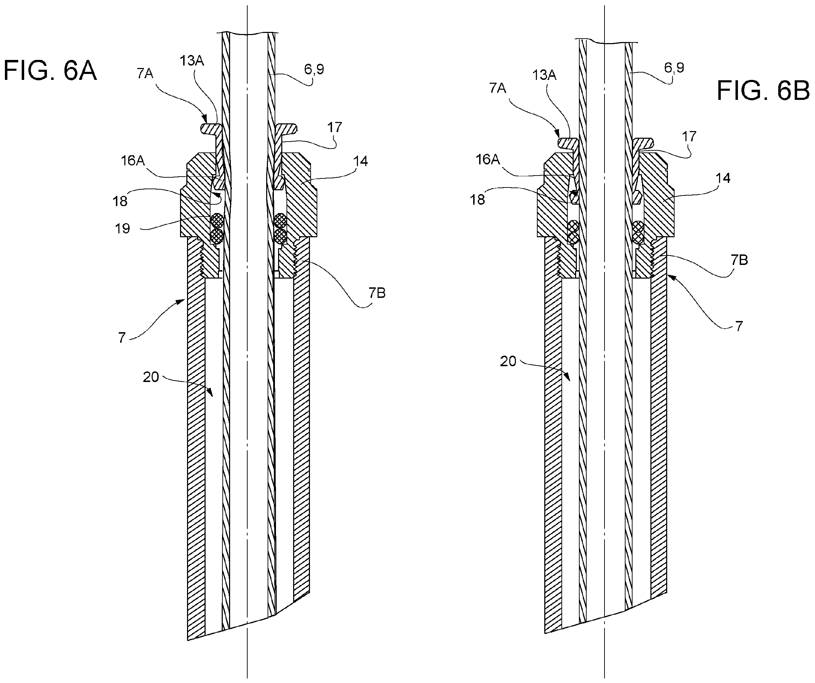

According to an aspect of the present invention, each fixing device 7A, 8A comprises a respective driving member 13A, 13B preferably annular in shape and coaxial to the corresponding sleeve 7, 8. The member 13B is defined for example by a threaded member, such as a nut or a ring nut (Figures 5A and 5B). The member 13A, 13B can be moved manually and/or with the aid of suitable equipment between a blocking position and a release position: in the blocking position (Figures 5A and 6A), the fixing device 7A, 8A defines an interference fit which keeps the corresponding sleeve 7, 8 in a fixed position. The interference can occur directly on the pipe 6, or it can occur on a possible cover sheath 9, which will be described below. In the release position, the sleeve 7, 8 is substantially free to slide along the pipe 6 to be axially retracted and thus moved away from the aforementioned operating position.

With reference to the particular example shown in Figures 5A and 5B, the fixing device 8A comprises a connecting element 14 fixed in fluid-tight manner to the end 8B, for example by means of a threaded coupling, whereas the member 13B is screwed to a corresponding external thread of the connecting element 14, so as to determine the aforementioned interference when it is in a position of complete screwing on such external thread. In this example, therefore, the member 13B defines a nut screw.

According to an alternative, not illustrated, the member 13B can have a male thread screwed to a female thread.

Therefore, the member 13B can be screwed and unscrewed with respect to the sleeve 7, 8 to be moved between the aforementioned release position, in which it is loosened, and the aforementioned blocking position, in which it is fully tightened on the thread of the connecting element 14.

In the illustrated solutions, the connecting element 14 is shown as a piece which is distinct from the sleeve 8 and is fixed thereto in fluid-tight manner. According to alternatives, not illustrated, the connecting element 14 and the sleeve 8 (or 7) are parts of a single body (hence the connecting element 14 also represents the end 8B, or 7B), or a different mode is provided (for example a welding, a gluing, or an interference fit) for fixing in fluid-tight manner the connecting element 14 to the sleeve 7,8.

The member 13B has an axial through hole which is passed through, preferably with radial clearance, by the pipe 6 (and by the possible sheath 9).

Preferably, the fixing device 8A further comprises a ring 15, defined for example by a gasket carried by the connecting element 14, and radially interposed between the latter and the external surface of the pipe 6 (or of the possible sheath 9).

The ring 15 comprises at least one elastically deformable portion 16, which deforms radially so as to reduce its internal radius when the member 13B is moved from the release position to the blocking position, so as to generate the interference fit with the pipe 6 (or with the possible sheath 9). In the release position of the member 13B, the elastically deformable portion 16 returns to a rest condition, in which it has an internal radius greater than or equal to that of the pipe 6 (or that of the possible sheath 9), so as to be able to slide axially in a substantially free manner (i.e. with a possible but limited friction, which can be overcome by means of a simple manual traction or an axial thrust on the corresponding sleeve 8). Figure 5B shows some components in exploded view, but in reality, in the aforementioned release position, the member 13B is not necessarily completely unscrewed, and the ring 15 remains coupled in a fixed relative position to the connecting element 14 despite the sliding of the sleeve 8 along the pipe 6.

In this particular solution of Figures 5A and 5B, the connecting element 14 ends with a tip 14A having a reduced cross section, for example a tapered tip, which is elastically deformed by the member 13B when the latter reaches its blocking position. In particular, the tip 14A has a shape and/or material such as to bend radially inwards when it receives an axial thrust from a flared surface 14B of the member 13B. When the tip 14A is pressed and deformed, the flared surface 14B clamps the tip 14A radially inwards, and thus also the elastically deformable portion 16, so as to generate the aforementioned interference (Figure 5A). By unscrewing the member 13B (in the release position), the tip 14A and the ring 15 return to a substantially undeformed rest condition.

According to an alternative, not illustrated, the member 13B and/or the ring 15 are shaped in a different manner, and the member 13B acts directly on the ring 15 (and no longer on the connecting element 14) for deforming the elastically deformable portion 16, when the blocking position is reached. Furthermore, the ring 15 can have different positions from the one illustrated by way of example.

In this particular solution of Figures 5A and 5B, the ring 15 has an additional gasket function, since it also ensures the hydraulic seal between the sleeve 8 and the external surface of the pipe 6 (or that of the possible sheath 9).

In the alternative solution shown in Figures 6A and 6B, of the quick-attachment type, the connecting element is still indicated by reference numeral 14, whereas the elastically deformable portion is indicated by reference numeral 16A: the latter forms part of the member 13A. Also in this case, as in Figures 5A and 5B, the elastically deformable portion 16A is an element distinct from the sleeve 7, and the latter remains radially spaced from the pipe 6 (and from the possible sheath 9). More specifically, the elastically deformable portion 16A is defined by one or more fins which project axially from a head portion 17 of the member 13A and are able of bending radially inwards.

In particular, the elastically deformable portion 16A is housed inside the connecting element 14, whereas the head portion 17 is at least partially outside the connecting element 14, so that it can be moved manually, and/or with the aid of suitable equipment, by a user, between the blocking and release positions. The connecting element 14 has an internal surface 18, which radially faces the elastically deformable portion 16A and is shaped so as to define a wedge or a cam which pushes and deforms the elastically deformable portion 16A radially inwards when the member 13A is axially moved from the release position (Fig. 6B) to the blocking position (Fig. 6A).

The member 13A is preferably made of plastic material. According to a variation, not illustrated, the elastically deformable portion 16A supports a metal insert which increases the grip on the pipe 6 or on the sheath 9, in the interference fit.

As mentioned above, this solution defines a quick attachment: in fact, the member 13A is coupled so as to be able to simply translate with respect to the end 7B between the release and blocking positions. In other words, a sliding coupling is provided which axially guides the member 13A, without any thread, for a more immediate drive.

In this solution of Figures 6A and 6B, at least one gasket ring 19 is provided as additional element, for ensuring the hydraulic seal of the sleeve 7 on the external surface of the pipe 6 (or on the external surface of the possible sheath 9). The gasket ring 19 is preferably housed in the connecting element 14, for example at the internal surface 18, at the opposite axial end with respect to the member 13A. Also in this case, according to not illustrated variations, the connecting element 14 could be in a single piece with the sleeve 7, or be fixed to the latter in fluid-tight manner by means of a mode different from threading (for example a welding, a gluing, or an interference fit).

By way of example, the sleeve 7, 8 can be made of rigid material. In any case, the sleeve 7, 8 has an internal diameter greater than that of the pipe 6 and of the possible sheath 9, so as to form an annular chamber 20 with respect to the end of the pipe 6 and of the possible sheath 9 (Figures 5A and 6A).

In the illustrated embodiment, the sleeve 7, 8 has a circular cross section. In an alternative (not illustrated), the sleeve 7, 8 can also have a polygonal cross section.

As mentioned above, the system 1 is provided with two sleeves, at respective opposite end segments of the pipe 6. However, according to not illustrated solutions, only one of such end segments could be provided with the sleeve 7,8.

In the operating position, the sleeves 7, 8 and the possible sheath 9 have a protection function of the pipe 6, and a shielding and collecting function as regards any liquid leaked out of the pipe 6 in the event of breakage phenomena or other anomalies, in particular in proximity to the fittings 2 and/or 4. Consequently, the risk of accidental injuries of an operator who is operating in proximity to the line 100, or of damage to the surrounding environment, is significantly reduced.

On the other hand, should it prove necessary to implement inspection operations, after loosening the fixing device 7A, 8A, the corresponding sleeve 7, 8 can be spaced from the respective fitting 2, 4 and fixed again in position, to carry out maintenance or simple inspection operations.

The sleeves 7, 8 also contribute to averting wear phenomena of the pipe 6, due to vibrations, torsions or other mechanical or physical stresses, by virtue of their shielding function.

With reference to Figures 1A-1D, as mentioned above, the system 1 preferably comprises a cover sheath 9, which covers the pipe 6, and forms a gap with respect to the pipe 6, since it has an internal diameter greater than the external diameter of the pipe 6. Moreover, such sheath 9 cooperates together with the sleeves 7, 8 for shielding the pipe 6.

The sheath 9 does not cover, i.e. leaves uncovered, the opposite end segments of the pipe 6, the sealing devices 2A, 4A and the fittings 2, 4, so as not to prevent their inspection and the leaking out of liquid from the aforementioned gap.

When the sleeve 7, 8 is in the operating position, the annular channel formed by the sheath 9 leads to the annular chamber 20 formed by the sleeve 7, 8, and is therefore in permanent hydraulic communication with such annular chamber 20.

Hence, in the event of seeping of liquid from an intermediate segment of the pipe 6, for example due to a crack or breakage of such pipe 6, the seeped liquid exits in the annular channel formed by the sheath 9 and then flows, by gravity and/or by pressure, towards at least one of the annular chambers 20.

Preferably, the system 1 further comprises a T-fitting 10, connected in fluid-tight manner to two separate parts of the sheath 9, and communicating with the annular channels formed by such parts by means of a first pipe fitting 10A and a second pipe fitting 10B, respectively. The fitting 10 has a drainage opening 21 conveniently defined by a third pipe fitting 10C of the fitting 10. The third pipe fitting 10C is arranged between the pipe fittings 10A and 10B and can be coupled in fluid-tight manner to a duct (not shown) of suitable length. More generally, the opening 21 is provided along the sheath 9: the liquid possibly collected in the annular chambers 20 of the sleeves 7, 8 and/or in the annular channels of the sheath 9 is drained through the opening 21, and directed towards a suitable tank for its recovery. At the same time, the opening 21 prevents the arising of excessive pressure inside the sheath 9, thus preventing risks of breakage of the system 1.

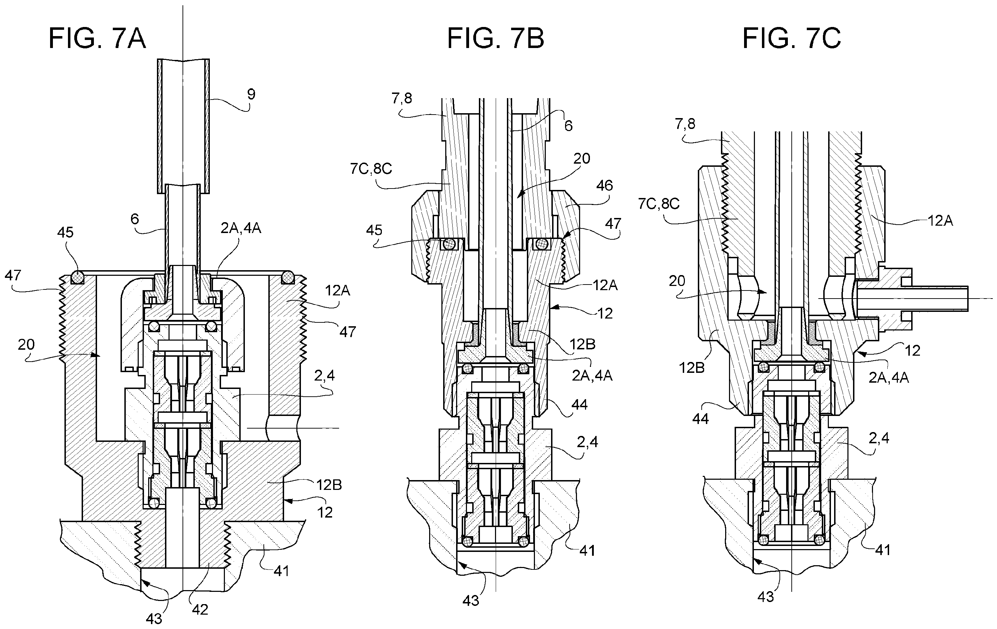

According to an aspect of the present invention, the system 1 further comprises at least one shoulder body 12, which is preferably shaped like a cup, and is arranged in a fixed and coaxial position with respect to the fitting 2 or the fitting 4. In particular, a body 12 is provided for each of the two sleeves 7,8. The body 12 is coupled in fluid-tight manner to the end 7C, 8C when the sleeve 7,8 is arranged in the operating position, so as to delimit and axially close the annular chamber 20 and thus prevent drippings of the liquid which can collect inside such annular chamber 20. In particular, the body 12 comprises a collar portion, i.e. an annular lip 12A (Figures 7A-7C), and delimits an axial end of the annular chamber 20 when the sleeve 7, 8 is in its operating position. In such operating position, the liquid that seeps and flows into the annular chamber 20 (for example the liquid conveyed by the annular channel formed by the sheath 9) tends to collect at the bottom, i.e. on the body 12.

With reference to the configuration of Figure 7A, the body 12 comprises a base 12B having an external edge from which the lip 12A projects axially. The base 12B is axially perforated and is fixed in fluid-tight manner to a body 41, which is part of the device 3, or, similarly, of the device 5, for example by means of a tang 42 which is screwed into a threaded seat 43 defining an outlet of the body 41. According to a variation not shown, the bodies 12 and 41 form a single piece, hence the body 12 forms part of the device 3, 5.

The fitting 2, or similarly the fitting 4, is fixed in fluid-tight manner to the base 12B, projects in the opposite direction to the body 41 and is surrounded by the lip 12A, hence it remains housed in the annular chamber 20, together with the corresponding device 2A, 4A when the sleeve 7,8 is arranged in its operating position.

In this configuration, the body 12 has a connecting function between the body 41 and the fitting 2, 4. In particular, the fitting 2, 4 is screwed into a threaded seat of the base 12B. According to a variation, not illustrated, the body 12 and the fitting 2, 4 form a single piece.

In the variation shown in Figure 7B, the fitting 2,4 is fixed directly to the body 41 and projects with respect to the body 41, as in the known solutions. In particular, the fitting 2, 4 is screwed into the seat 43, but it could also be formed in one piece with the body 41, according to a not illustrated variation.

The body 12 is fixed in fluid-tight manner to one end of the fitting 2, 4 and preferably cooperates with the device 2A, 4A for coupling in fluid-tight manner the pipe 6 to the fitting 2,4. In particular, the body 12 ends axially with a nut screw portion 44 which is screwed onto the fitting 2, 4 and replaces a ring nut of the device 2A, 4A.

In this configuration of Figure 7B, the annular chamber 20 does not house the fitting 2, 4. Therefore, to carry out an inspection or maintenance on the fitting 2,4 and/or the device 2A, 4A it is necessary to dismount the body 12, unscrewing it from the fitting 2,4 (after loosening the corresponding device 7A, 8A).

According to a variation, not illustrated, an adapter or interface fitting can be provided between the fitting 2, 4 and the device 2A, 4A; in particular, such adapter comprises a seat which is engaged by one end of the fitting 2, 4, in a fixed and fluid-tight position, and a threaded stem, which has a different diameter from that of such seat and is screwed into the nut screw portion 44. Of course, the adapter can be fixed to the fitting and/or to the body 12 in different modes, for example by means of gluing. By means of the adapter it is possible to adapt the body 12 to fittings 2, 4 which are already provided on the devices 3, 5, but which have different diameters from those provided on the body 12. In any case, the pipe 6 remains connected in fluid-tight manner to the fitting 2, 4, by means of the device 2A, 4A and by means of the interposition of the aforementioned adapter.

In Figures 7A and 7B, the sleeve 7, 8 has a diameter substantially equal to that of the lip 12A, hence it tends to rest axially against the lip 12A. According to the variation of Figure 7C, instead, the lip 12A has an internal diameter greater than or equal to the external diameter of the sleeve 7,8 so as to wrap and house the end 7C, 8C when such sleeve 7,8 is arranged in its operating position.

Preferably, in such operating position, the end 7C, 8C is fixed to the body 12 by means of a threaded coupling, whereas the seal between the end 7C, 8C and the body 12 is ensured by at least one gasket ring 45. In the examples of Figures 7A-7B, a ring nut or nut 46 is axially constrained to the end 7C, or similarly 8C, and is free to rotate with respect to the sleeve 7, 8 so that it can be screwed onto an external thread 47 of the body 12, axially block the sleeve 7, 8 with respect to the body 12, and compress the gasket ring 45.

In the variation of Figure 7C, instead, the lip 12A defines a nut screw, into which the end 7C, 8C is screwed directly. According to a variation, not illustrated, the end 7C, 8C is simply inserted into the body 12, without a threaded coupling, and the seal is ensured by a ring radially interposed between the end 7C, 8C and the lip 12A.

It is possible to move the sleeve 7, 8 away from its operating position, and thus from the body 12, after releasing the member 13B, 13A of the fixing device 7A, 8A, and after unscrewing the threaded coupling (if provided) which couples the end 7C, 8C to the body 12. In the case of Figures 7B and 7C, the hydraulic sealing device 2A, 4A and/or the fitting 2, 4 are accessible for inspection or maintenance only after removing also the body 12.

According to an alternative, not illustrated, the sealing and the fixing between the end 7C, 8C and the body 12 are ensured by glue. In this case, preferably, the body 12 is screwed to the fitting 2, 4 (as in Figures 7B and 7C), in order to be moved together with the sleeve 7, 8 after releasing the member 13B, 13A of the fixing device 7A, 8A.

According to a further variation, not illustrated, the sealing and the fixing between the end 7C, 8C and the body 12 are ensured by a fixing system (not illustrated) which has the same features as the fixing device 7A, 8A described above with reference to Figures 5A, 5B, 6A, 6B and is carried by the lip 12A.

By virtue of the body 12 which delimits and axially closes the annular chamber 20, the system 1 prevents phenomena of dripping and dispersion of liquid in the environment in the event of failures and seeping of such liquid from the pipe 6. In fact, the body 12 is fixed and coaxial with respect to the fitting 2, or similarly to the fitting 4, and is coupled so as to ensure the sealing with respect to the fitting 2, 4. On the basis of the examples described above, it is evident that the body 12 can be fixed to the fitting 2, 4 directly or indirectly (by means of an adapter or interface) or be in a single piece with the fitting 2, 4.

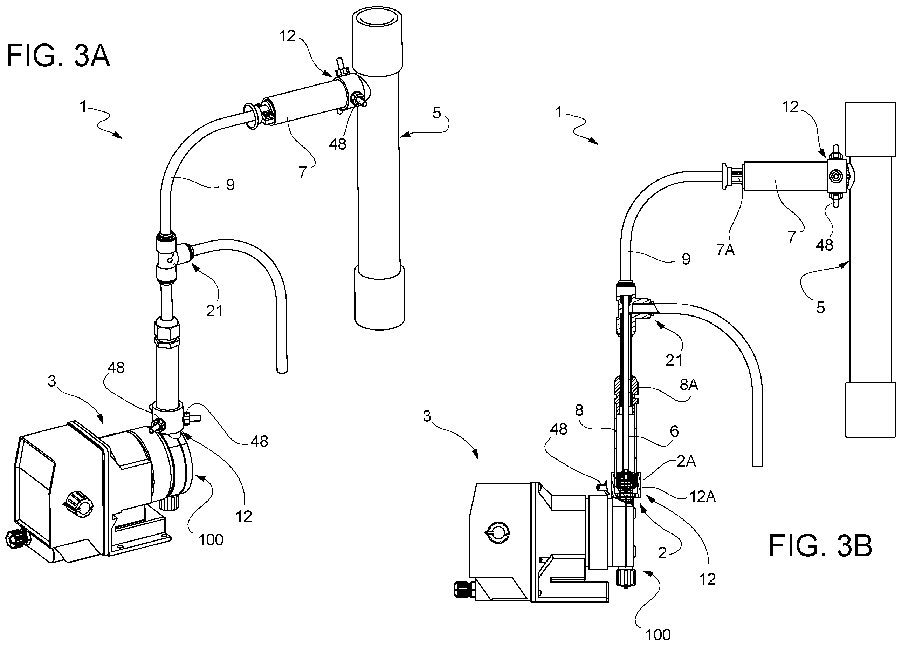

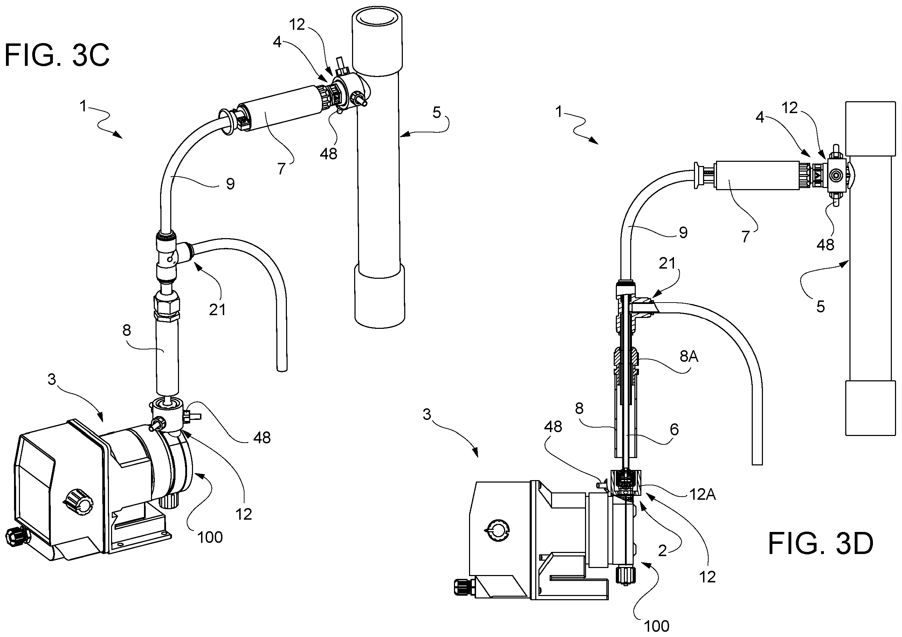

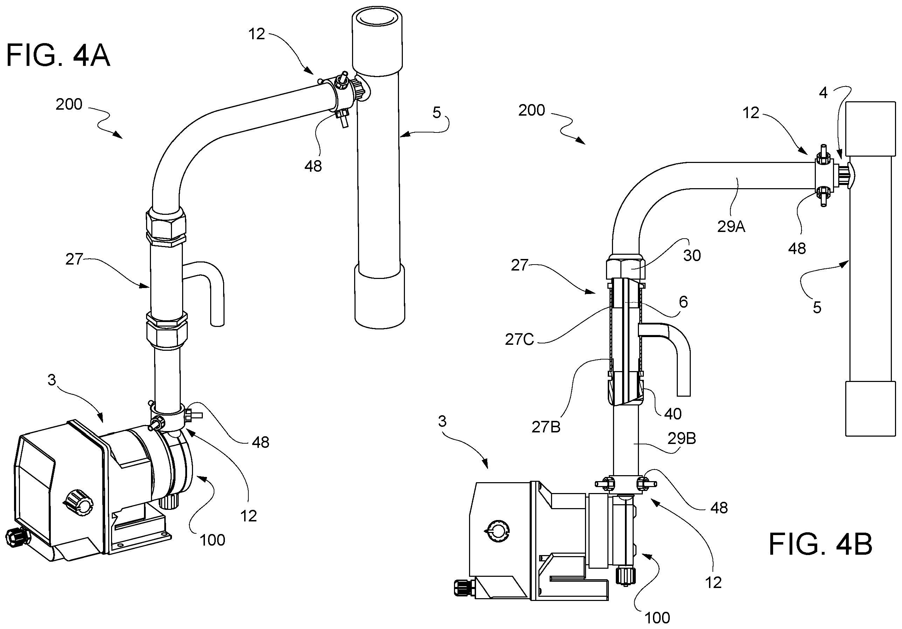

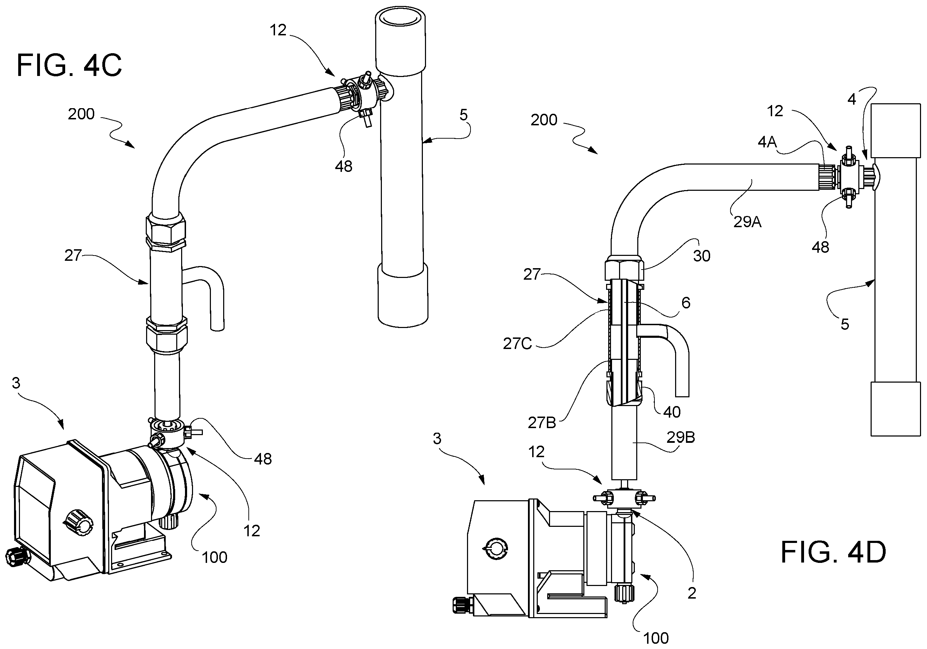

According to a preferred aspect of the present invention, as shown in the variations of Figures 3A-3D and 4A-4D, the body 12 has at least one drainage hole or opening 48 for putting the aforementioned annular chamber 20 in communication with the outside. The opening 48 can be provided in combination with or alternatively to the opening 21 mentioned above. Preferably, the opening 48 is formed radially through the lip 12A. For example, the opening 48 can be defined by a threaded hole, and it can be closed in fluid-tight manner by means of a plug, if not used.

Conveniently, the opening 48 can accommodate a fitting which will thus be connected in fluid-tight manner to the body 12, and/or can also be used to couple a sensor configured to detect and signal any presence of liquid. According to a variation, a discharge pipe can be coupled to the body 12 for removing the liquid flowing out of the opening 48.

For example, the body 12 can be provided with a plurality of radial openings 48, circumferentially spaced from one another along the lip 12A (also for facilitating the choice of one or the other of such openings).

If the opening 48 is provided together with one or more openings 21, it will be possible to discharge the liquid in several points, ensuring in such manner an efficient drainage level on the whole line 100, irrespective of the length and path of the pipe 6.

Clearly, what has been illustrated regarding the sleeve 7 also applies to the sleeve 8, and vice versa.

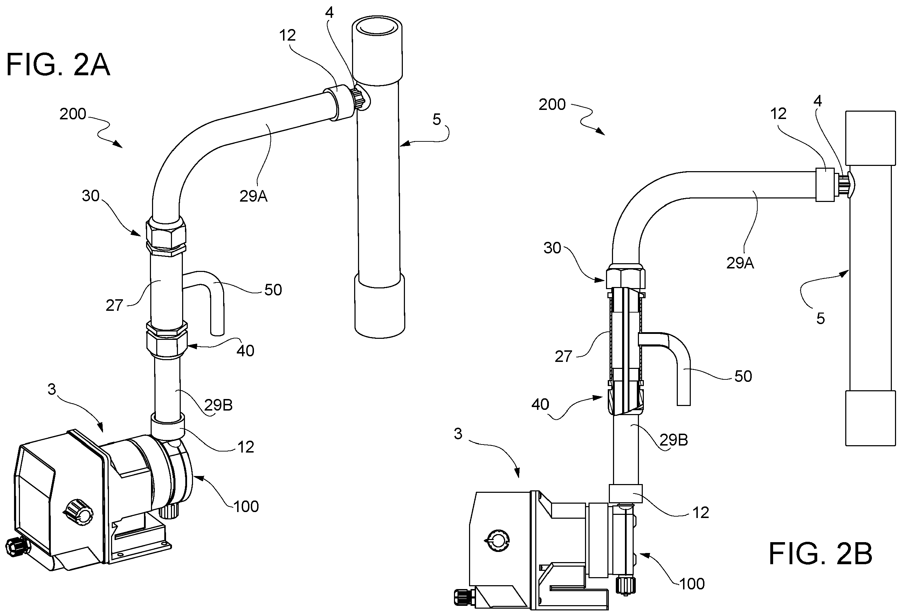

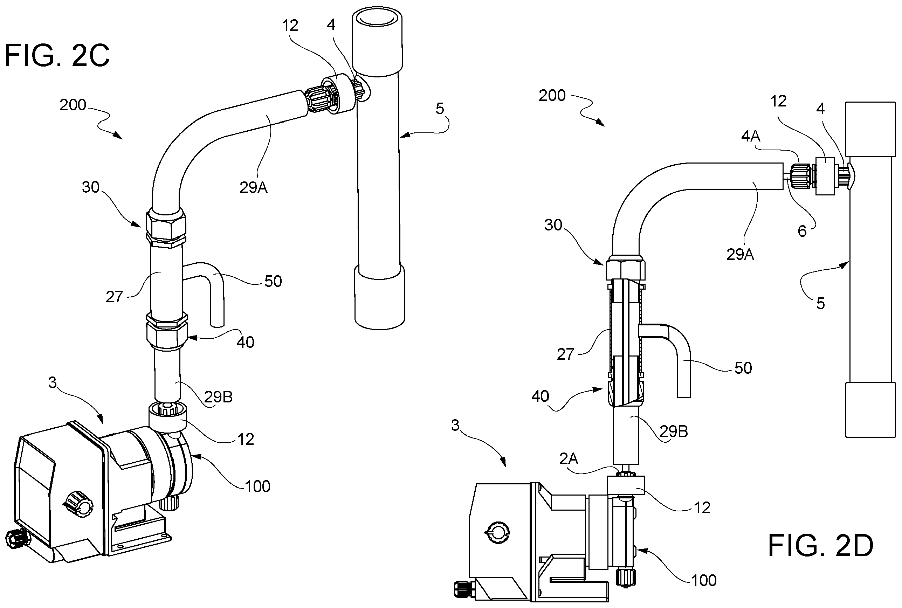

According to a second embodiment, Figures 2A-2D show a liquid recovery and safety system indicated by reference numeral 200.

The system 200 comprises: a sleeve 27, arranged around an intermediate segment of the pipe 6 and having an internal diameter greater than the pipe 6; a sleeve 29B, which is mounted in an axially slidable manner, with respect to an end 27B of the sleeve 27, and projects from such end 27B towards the fitting 2 and the device 3; a sleeve 29A, which is mounted in an axially slidable manner with respect to an end 27C of the sleeve 27, and projects towards the fitting 4 and the device 5; a first fixing device 40, mounted on the end 27B of the sleeve 27 for releasably fixing the sleeve 29B with respect to the same sleeve 27; and a second fixing device 30 for releasably fixing the sleeve 29A to the sleeve 27.

The fixing devices 30 and 40 preferably have the same features as the fixing devices 7A and/or 8A, hence they are not described in detail. It follows that the fixing devices 30 and 40, in their blocking position, interference fit on the external surface of the sleeves 29B and 29A.

When the sleeves 29A and 29B include a bend, in order to follow the path of the pipe 6, they must have a certain degree of flexibility in order to be able to slide easily along the pipe 6; when the sleeves 29A and 29B are rectilinear, they can also be rigid.

The sleeves 29A and 29B have the same function as the sleeves 7 and 8 described above, since they form respective annular chambers 20 around end segments of the pipe 6.

In particular, the sleeve 29B and the sleeve 29A are slidable independently of one another with respect to the sleeve 27 between an operating position, in which they are coupled in fluid-tight manner to the respective bodies 12, in proximity to the fittings 2 and 4, so as to delimit and axially close the corresponding annular chambers 20, and a retracted position, in which the sleeves 29B and 29A leave the respective end segments of the pipe 6 uncovered, for example for enabling an inspection by the operator.

In particular, the sleeves 29B and 29A are slidable inside the sleeve 27 when they retract with respect to their operating position.

As mentioned above, when the sleeves 29B and 29A are arranged in their operating position, said sleeves 29A and 29B are coupled in fluid-tight manner to the respective bodies 12, for example according to the configuration shown in Figure 7C. The simultaneous coupling of the two sleeves 29B and 29A to the respective bodies 12 contributes to the keeping of the sleeves 29A, 29B and 27 in fixed positions with respect to the pipe 6, hence the bodies 12 also have a fixing function, cooperating with the devices 30 and 40 (Figures 2A, 2B, 4A, 4B).

It will be noted that the sleeves 29B, 29A and 27 form a gap with respect to the pipe 6, similarly to what has been seen above for the sheath 9 in the system 1. The annular chambers 20 formed by the sleeves 29B and 29A represent the ends of such gap. The fixing devices 40 and 30 are configured to ensure the hydraulic seal of this gap at the opposite axial ends 27C and 27B of the sleeve 27 (like the fixing devices 7A, 8A are configured to ensure the seal on the pipe 6, or on the sheath 9, for the system 1).

As illustrated in Figures 2A-2D, the system 200 preferably comprises a duct 50, which is in communication with such gap, extends from the fitting 27 and also defines a drainage opening, like the openings 21 and 48 described above. In fact, by means of the duct 50, any liquid poured into the aforementioned gap is drained and recovered outside.

Preferably, the sleeve 27 is made of rigid material and has a circular cross section. Alternatively, the sleeve 27 can have a polygonal cross section.

The two bodies 12 axially close the opposite ends of the aforementioned gap, and can receive and collect the liquid which seeps into the gap. The collected liquid can be drained through the openings 48 (Figures 4A-4D) of the bodies 12 and/or through the duct 50.

In light of the foregoing, it is possible to appreciate that the system 1, 200 according to the present invention has a high safety level, as it prevents the liquid possibly seeped from the pipe 6 from being dispersed into the environment or causing damage around the line 100. At the same time, such liquid is easily recovered through at least one drainage opening.

Furthermore, the system 1, 200 allows obtaining a high protection level around the pipe 6, for preventing the occurrence of premature wear phenomena and consequent formation of breakages or cracks.

It is also apparent that the system 1, 200 is extremely simple to assemble, and can be used in an extremely simple and fast manner by the operators who need to move the sleeves 7, 8, 27, 29A, 29B, for an inspection and/or for maintenance.

The system 1, 200 can be sold as a kit and then installed on hydraulic supply lines that are already installed and in place, to increase the safety and protection thereof and to allow the recovery of liquid that possibly seeps from such lines in the event of failure or wear. In any case, the system 1, 200 can also be sold, possibly in the form of optional, together with new devices 3 that have yet to be installed; in this case, as mentioned above, the body 12 could be integrated directly into the body of the device 3 (or possibly also into the fittings 2, 4).

Moreover, further advantages are apparent to a person skilled in the art on the basis of the features described and illustrated above.

Finally, it is apparent from the foregoing that modifications and variations can be made to the described system 1, 200, which do not depart from the scope of protection of the present invention, as defined in the appended claims.

In particular, in addition to the variations mentioned above, the system 1 can include more than one fitting 10 along the sheath 9, and the system 200 can include more than one sleeve 27 along the pipe 6, so as to form a series of drainage openings distributed along the line 100; and/or the sheath 9 and/or the fitting 10 could be absent; and/or the opening 48 could be formed through the base 12B; and/or the body 12 could have a different shape from that shown (for example, it could be devoid of the lip 12A, with only the base 12B that is coupled in fluid-tight manner to the sleeve 7, 8, 29A, 29B).

If only part of the pipe 6 is to be protected, it is possible to use only some of the components described above to obtain the desired result (for example, the system 1 can have a single sleeve arranged at the valve 2 or at the valve 4).

Furthermore, the components of the system 200 and those of the system 1 could be integrated with one another for forming a mixed system: purely by way of example, the fixing device 30 and/or the fixing device 40 of the sleeve 27 could be gripped on the sheath 9, instead of on the sleeves 29A, 29B, and it will then be possible to couple such sheath 9 to the sleeve 7 and/or 8.

## Claims

1. A liquid recovery and safety system (1;200) for a hydraulic pipe (6) which is coupled in fluid-tight manner, in use, to a delivery fitting (2) and to an injection fitting (4) for conveying a pressurised liquid; the system (1) comprising:
- at least one shoulder body (12) arranged, in use, in a fixed and coaxial position, at one of the delivery and injection fittings (2, 4);
- at least one sleeve (7, 8; 29A, 29B) which has a first and a second axial end, opposite to one another, and is suitable to be arranged coaxially around said pipe (6) in an operating position, in which said sleeve (7, 8; 29A, 29B) is coupled in fluid-tight manner to said shoulder body (12) and forms, in use, an annular chamber (20) around an end segment of said pipe;
- fixing means (7A, 8A; 30, 40) for fixing said sleeve (7, 8; 29A, 29B) with respect to said pipe (6);
- at least one drainage opening (21, 48; 50, 48) communicating with said annular chamber (20) to allow the liquid to flow out of said annular chamber (20) towards the outside;
**characterised in that** said fixing means are manoeuvrable, manually and/or with the aid of suitable equipment, for releasably fixing the sleeve with respect to the pipe (6) in any desired position along the pipe (6), and comprise a driving member (13B; 13A) which is movable with respect to said sleeve (7, 8; 29A, 29B), in response to a manual action, between
a) a release position, in which said sleeve (7, 8; 29B, 29A) is substantially free to axially slide from and towards said operating position;
b) a blocking position, in which said fixing means stop the axial sliding of said sleeve (7, 8; 29B, 29A).

2. The system according to claim 1, comprising a cover sheath (9) suitable to be arranged, in use, around said pipe (6), and having an internal diameter greater than the external diameter of said pipe (6) so as to form, in use, an annular channel with respect to said pipe (6), said annular channel communicating with said annular chamber (20); and wherein said fixing means are carried by said first end and, in said blocking position, are interference fitted onto said cover sheath (9).

3. The system according to claim 2, wherein said drainage opening (21) is located along said cover sheath (9).

4. The system according to claim 3, wherein said cover sheath (9) comprises a first and a second sheath portion; and wherein the system further comprises a T-fitting (10) having:
- a first pipe fitting (10A) and a second pipe fitting (10B) coupled in fluid-tight manner to said first and second sheath portions, respectively, and
- a third pipe fitting (10C) arranged in an intermediate position between said first pipe fitting (10A) and said second pipe fitting (10B) and defining said drainage opening (21).

5. The system according to claim 1, comprising a further sleeve (27) suitable to be arranged, in use, around said pipe (6); and wherein said fixing means are carried by said further sleeve (27) and, in said blocking position, are interference fitted onto said sleeve (29B, 29A).

6. The system according to claim 5, wherein said further sleeve (27) has an internal diameter greater than the external diameter of said pipe (6) so as to form, together with said sleeve (27B, 27A), a gap with respect to said pipe (6); and wherein said drainage opening (50) is provided in said further sleeve (27).

7. The system according to claim 1, wherein said fixing means are carried by said first end and, in said blocking position, in use, are interference fitted onto said pipe (6).

8. The system according to any one of the preceding claims, wherein said shoulder body (12) comprises a collar portion (12A) which radially delimits an axial end of said annular chamber (20) and is coupled in fluid-tight manner to said second end, in said operating position.

9. The system according to claim 8, wherein said drainage opening (48) is made through said collar portion (12A).

10. The system according to any one of the preceding claims, wherein said fixing means comprise an elastically deformable portion (16; 16A), distinct from said sleeve (7, 8; 29B, 29A); and wherein said driving member (13B; 13A), in said blocking position, causes a radial deformation of said elastically deformable portion (16; 16A) so as to reduce the internal radius of said elastically deformable portion (16; 16A) and determine an interference fit.

11. The system according to claim 10, wherein said elastically deformable portion (16) defines part of a deformable element (15) distinct from said driving member (13B).

12. The system according to any one of the preceding claims, comprising two of said shoulder bodies (12) and two of said sleeves (7,8; 29A, 29B) arranged, in use, at opposite ends of said pipe.

13. A pressurised liquid supply line (100), comprising:
- inlet means (3) comprising a delivery fitting (2);
- a pipe (6) coupled in fluid-tight manner to said delivery fitting (2);
- a liquid recovery and safety system (1; 200) according to any one of the preceding claims; said shoulder body (12) being fixed and coaxial with respect to said delivery fitting (2).

## Patentansprüche

1. Flüssigkeitsrückgewinnungs- und Sicherheitssystem (1; 200) für eine Hydraulikleitung (6), die im Betrieb fluiddicht mit einer Abgabevorrichtung (2) und einem Einspritzanschluss (4) zum Fördern einer unter Druck stehenden Flüssigkeit verbunden ist, wobei das System (1) Folgendes umfasst:
- mindestens einen Schulterkörper (12), der im Gebrauch in einer festen und koaxialen Position an einer der Abgabe- und Einspritzvorrichtungen (2, 4) angeordnet ist;
- mindestens eine Hülse (7, 8; 29A, 29B), die ein erstes und ein zweites, einander gegenüberliegendes axiales Ende aufweist und geeignet ist, in einer Arbeitsstellung koaxial um das Rohr (6) angeordnet zu werden, wobei die Hülse (7, 8; 29A, 29B) ist fluiddicht mit dem Schulterkörper (12) verbunden und bildet bei Verwendung eine ringförmige Kammer (20) um ein Endsegment des Rohrs;
- Befestigungsvorrichtungen (7A, 8A; 30, 40) zum Fixieren der Hülse (7, 8; 29A, 29B) im Hinblick auf das Rohr (6);
- mindestens eine Entwässerungsöffnung (21, 48; 50, 48), die mit der ringförmigen Kammer (20) verbunden ist, damit die Flüssigkeit aus der ringförmigen Kammer (20) nach außen fließen kann;
**dadurch gekennzeichnet, dass** die Befestigungsmittel manuell und/oder mit Hilfe geeigneter Geräte betätigt werden können, um die Hülse im Hinblick auf das Rohr (6) in jeder gewünschten Position entlang des Rohrs (6) lösbar zu fixieren, und ein Antriebselement umfassen (13B; 13A) umfassen, das in Reaktion auf eine manuelle Betätigung im Hinblick auf die Hülse (7, 8; 29A, 29B) zwischen
a) eine Freigabeposition, in der die Hülse (7, 8; 29B, 29A) im Wesentlichen frei ist, um axial aus der Arbeitsstellung heraus und in diese hinein zu gleiten;
b) eine Sperrposition, in der die Befestigungsmittel das axiale Schieben der Hülse (7, 8; 29B, 29A) verhindern.

2. System nach Anspruch 1, umfassend eine Abdeckhülle (9), die dazu geeignet ist, im Gebrauch um das Rohr (6) herum angeordnet zu werden, und einen Innendurchmesser aufweist, der größer ist als der Außendurchmesser des Rohrs (6), um im Gebrauch einen ringförmigen Kanal im Hinblick auf das Rohr (6) zu bilden, wobei der ringförmige Kanal mit der ringförmigen Kammer (20) in Verbindung steht; wobei die Fixiermittel vom ersten Ende getragen werden und in der Sperrposition mit Fitting auf der Abdeckhülle (9) sitzen.

3. System nach Anspruch 2, wobei sich die Drainageöffnung (21) an der Stelle der Abdeckhülle (9) befindet.

4. System nach Anspruch 3, wobei die Abdeckhülle (9) einen ersten und einen zweiten Hüllenabschnitt umfasst; und wobei das System weiter ein T-Stück (10) umfasst, das Folgendes aufweist:
- ein erstes Rohrverbindungsstück (10A) und ein zweites Rohrverbindungsstück (10B), die fluiddicht mit dem ersten bzw. zweiten Hüllenabschnitt verbunden sind, und
- ein drittes Rohrverbindungsstück (10C), das in einer Zwischenposition zwischen dem ersten Rohrverbindungsstück (10A) und dem zweiten Rohrverbindungsstück (10B) angeordnet ist und die Entwässerungsöffnung (21) definiert.

5. System nach Anspruch 1, umfassend eine weitere Hülse (27), die geeignet ist, im Gebrauch um das Rohr (6) herum angeordnet zu werden; und wobei die Befestigungsmittel von der weiteren Hülse (27) getragen werden und in der Sperrposition in Eingriff mit der Hülse (29B, 29A) stehen.

6. System nach Anspruch 5, wobei die weitere Hülse (27) einen Innendurchmesser aufweist, der größer ist als der Außendurchmesser des Rohrs (6), so dass sie zusammen mit der Hülse (27B, 27A) eine Lücke im Hinblick auf das Rohr (6) bildet; und wobei die Entwässerungsöffnung (50) in der weiteren Hülse (27) bereitgestellt ist.

7. System nach Anspruch 1, wobei die Befestigungsmittel von dem ersten Ende getragen werden und in der Sperrposition bei Verwendung auf das Rohr (6) gepresst werden.

8. System nach einem der vorhergehenden Ansprüche, wobei der Schulterkörper (12) einen Kragenabschnitt (12A) umfasst, der ein axiales Ende der Ringkammer (20) radial begrenzt und in der Betriebsposition fluiddicht mit dem zweiten Ende gekoppelt ist.

9. System nach Anspruch 8, wobei die Drainageöffnung (48) durch den Kragenabschnitt (12A) hindurch ausgeführt ist.

10. System nach einem der vorhergehenden Ansprüche, wobei die Befestigungsmittel einen elastisch verformbaren Abschnitt (16; 16A) umfassen, der sich von der Hülse (7, 8; 29B, 29A) unterscheidet; und wobei das Antriebselement (13B; 13A) in der Sperrposition eine radiale Verformung des elastisch verformbaren Abschnitts (16; 16A) bewirkt, um den Innenradius des elastisch verformbaren Abschnitts (16; 16A) zu verringern und den Wert der Presspassung zu bestimmen.

11. System nach Anspruch 10, wobei der elastisch verformbare Abschnitt (16) einen Teil eines verformbaren Elements (15) bildet, das sich von dem Antriebselement (13B) unterscheidet.

12. System nach einem der vorhergehenden Ansprüche, das zwei der Schulterkörper (12) und zwei der Hülsen (7, 8; 29A, 29B) umfasst, die im Gebrauch an gegenüberliegenden Enden des Rohrs angeordnet sind.

13. Unter Druck stehende Flüssigkeitsversorgungsleitung (100), umfassend:
- ein Einlassmittel (3), umfassend eine Abgabevorrichtung (2);
- ein Rohr (6), das fluiddicht mit der Abgabevorrichtung (2) verbunden ist;
- ein Flüssigkeitsrückgewinnungs- und Sicherheitssystem (1; 200) nach einem der vorhergehenden Ansprüche, wobei der Schulterkörper (12) im Hinblick auf die Abgabevorrichtung (2) fixiert und koaxial ist.

## Revendications

1. Système de récupération de liquide et de sûreté (1 ; 200) pour une conduite hydraulique (6) qui est couplé de manière étanche aux fluides, en utilisation, à un raccord de distribution (2) et à un raccord d'injection (4) pour le transport d'un liquide sous pression ; le système (1) comprenant :
- au moins un corps d'épaulement (12) agencé, en utilisation, dans une position fixe et coaxiale, au niveau de l'un des raccords de distribution et d'injection (2, 4) ;
- au moins un manchon (7, 8 ; 29A, 29B) qui possède une première et une deuxième extrémité axiale, opposées l'une à l'autre, et est approprié pour être agencé de manière coaxiale autour de ladite conduite (6) dans une position opérationnelle, dans laquelle ledit manchon (7, 8 ; 29A, 29B) est couplé de manière étanche aux fluides audit corps d'épaulement (12) et forme, en utilisation, une chambre annulaire (20) autour d'un segment d'extrémité de ladite conduite ;
- des moyens de fixation (7A, 8A ; 30, 40) pour la fixation dudit manchon (7, 8 ; 29A, 29B) par rapport à ladite conduite (6) ;
- au moins une ouverture de drainage (21, 48 ; 50, 48) communiquant avec ladite chambre annulaire (20) pour permettre au liquide de s'écouler en sortie de ladite chambre annulaire (20) vers l'extérieur ;
**caractérisé en ce que** lesdits moyens de fixation sont manœuvrables, manuellement et/ou à l'aide d'un équipement approprié, pour la fixation de manière libérable du manchon par rapport à la conduite (6) dans une quelconque position souhaitée le long de la conduite (6), et comprennent un organe d'entraînement (13B ; 13A) qui est mobile par rapport audit manchon (7, 8 ; 29A, 29B), en réponse à une action manuelle, entre
a) une position de libération, dans laquelle ledit manchon (7, 8 ; 29B, 29A) est sensiblement libre de coulisser axialement depuis et vers ladite position opérationnelle ;
b) une position de blocage, dans laquelle lesdits moyens de fixation interrompent le coulissement axial dudit manchon (7, 8 ; 29B, 29A).

2. Système selon la revendication 1, comprenant une gaine de recouvrement (9) appropriée pour être agencée, en utilisation, autour de ladite conduite (6), et ayant un diamètre interne plus grand que le diamètre externe de ladite conduite (6) de façon à former, en utilisation, un canal annulaire par rapport à ladite conduite (6), ledit canal annulaire communiquant avec ladite chambre annulaire (20) ; et dans lequel lesdits moyens de fixation sont portés par ladite première extrémité et, dans ladite position de blocage, sont en ajustement serré sur ladite gaine de recouvrement (9).

3. Système selon la revendication 2, dans lequel ladite ouverture de drainage (21) est située le long de ladite gaine de recouvrement (9).

4. Système selon la revendication 3, dans lequel ladite gaine de recouvrement (9) comprend une première et une deuxième portion de gaine ; et dans lequel le système comprend en outre un raccord en T (10) ayant :
- un premier raccord de conduite (10A) et un deuxième raccord de conduite (10B) couplés de manière étanche aux fluides auxdites première et deuxième portions de gaine, respectivement, et
- un troisième raccord de conduite (10C) agencé dans une position intermédiaire entre ledit premier raccord de conduite (10A) et ledit deuxième raccord de conduite (10B) et définissant ladite ouverture de drainage (21).

5. Système selon la revendication 1, comprenant un manchon supplémentaire (27) approprié pour être agencé, en utilisation, autour de ladite conduite (6) ; et dans lequel lesdits moyens de fixation sont portés par ledit manchon supplémentaire (27) et, dans ladite position de blocage, sont en ajustement serré sur ledit manchon (29B, 29A).

6. Système selon la revendication 5, dans lequel ledit manchon supplémentaire (27) possède un diamètre interne plus grand que le diamètre externe de ladite conduite (6) de façon à former, conjointement avec ledit manchon (27B, 27A), un écartement par rapport à ladite conduite (6) ; et dans lequel ladite ouverture de drainage (50) est ménagée dans ledit manchon supplémentaire (27).

7. Système selon la revendication 1, dans lequel lesdits moyens de fixation sont portés par ladite première extrémité et, dans ladite position de blocage, en utilisation, sont en ajustement serré sur ladite conduite (6).

8. Système selon l'une quelconque des revendications précédentes, dans lequel ledit corps d'épaulement (12) comprend une portion de collier (12A) qui délimite radialement une extrémité axiale de ladite chambre annulaire (20) et est couplée de manière étanche aux fluides à ladite deuxième extrémité, dans ladite position opérationnelle.

9. Système selon la revendication 8, dans lequel ladite ouverture de drainage (48) est pratiquée à travers ladite portion de collier (12A).

10. Système selon l'une quelconque des revendications précédentes, dans lequel lesdits moyens de fixation comprennent une portion élastiquement déformable (16 ; 16A), distincte dudit manchon (7, 8 ; 29B, 29A) ; et dans lequel ledit organe d'entraînement (13B ; 13A), dans ladite position de blocage, provoque une déformation radiale de ladite portion élastiquement déformable (16 ; 16A) de façon à réduire le rayon interne de ladite portion élastiquement déformable (16 ; 16A) et à déterminer un ajustement serré.

11. Système selon la revendication 10, dans lequel ladite portion élastiquement déformable (16) définit une partie d'un élément déformable (15) distinct dudit organe d'entraînement (13B).

12. Système selon l'une quelconque des revendications précédentes, comprenant deux desdits corps d'épaulement (12) et deux desdits manchons (7, 8 ; 29A, 29B) agencés, en utilisation, aux extrémités opposées de ladite conduite.

13. Canalisation d'alimentation en liquide sous pression (100), comprenant :
- des moyens d'admission (3) comprenant un raccord de distribution (2) ;
- une conduite (6) couplée de manière étanche aux fluides audit raccord de distribution (2) ;
- un système de récupération de liquide et de sûreté (1; 200) selon l'une quelconque des revendications précédentes ; ledit corps d'épaulement (12) étant fixe et coaxial par rapport audit raccord de distribution (2).
